# EUROPEAN PATENT APPLICATION

(11) **EP 4 715 983 A1**
(43) Date of publication of application: **25.03.2026**
(21) Application number: 25755082.2
(22) Date of filing: 23.01.2025
(51) Int. Cl.: H01M 50/242, H01M 10/6568, H01M 10/613, H01M 10/6557, H01M 50/502, H01M 50/178

(54) **BATTERY MODULE AND BATTERY PACK INCLUDING SAME**

(30) Priority: 13.02.2024 KR 20240020265
(71) Applicant: LG Energy Solution, Ltd., Seoul 07335 (KR)
(72) Inventor: HWANG, Taewon, Daejeon 34122 (KR); SEO, Sung Won, Daejeon 34122 (KR); JUNG, Seyun, Daejeon 34122 (KR); KANG, Jongmo, Daejeon 34122 (KR); LEE, Inje, Daejeon 34122 (KR)
(74) Representative: Plasseraud IP
(86) International application number: PCT/KR2025/001268
(87) International publication number: WO 2025/173960

(57) **Abstract**

A battery module according to one embodiment of the present disclosure includes a battery cell stack including a plurality of stacked battery cells; and at least one cooling member arranged on at least one of both side surfaces of the battery cell stack or between the plurality of battery cells. The cooling member includes a cooling channel that is a space inside the cooling member where a coolant flows, and an air gap that is an empty space separated from the cooling channel.

## Description

### [TECHNICAL FIELD]

### CROSS-REFERENCE TO RELATED APPLICATIONS

This application is based on and claims priority from Korean Patent Application No. 10-2024-0020265, filed on February 13, 2024, with the Korean Intellectual Property Office, the disclosure of which is incorporated herein in its entirety by reference.

The present disclosure relates to a battery module and a battery pack including the same.

### [BACKGROUND]

In modern society, the use of portable devices such as mobile phones, laptops, camcorders, and digital cameras has become commonplace, leading to an active development in technologies related to these mobile devices. Furthermore, as a solution to the environmental issues such as air pollution caused by fossil fuel-powered vehicles like traditional gasoline vehicles, rechargeable secondary batteries are utilized as a power source for electric vehicles (EVs), hybrid electric vehicles (HEVs), plug-in hybrid electric vehicles (P-HEVs), and others. As a result, the need for developments of secondary batteries is increasing.

Secondary batteries, when exposed to temperatures above optimal levels, may experience performance degradation, and in severe cases, have the risk of explosion or ignition. A battery module or battery pack equipped with multiple secondary batteries, for example, battery cells, may experience a rapid and severe temperature rise due to the accumulation of heat generated by the densely packed battery cells in a confined space. In the case of a battery module with multiple stacked battery cells and a battery pack equipped with the battery module, although a high output may be achieved, it becomes challenging to effectively dissipate the heat generated during charge and discharge. Inadequate heat dissipation in battery cells may accelerate deterioration of battery cells, shorten the lifespan thereof, and increase the likelihood of explosion or ignition.

As the use of secondary batteries in the form of the battery module with the stacked battery cells and the battery pack becomes more widespread, incidents of ignition and explosion have emerged, highlighting the critical importance of addressing safety concerns in secondary batteries.

### [DETAILED DESCRIPTION OF THE INVENTION]

### [Technical Problem]

In one embodiment of the present disclosure, there are provided a battery module having a structure capable of controlling the swelling of battery cells while further enhancing cooling performance, and a battery pack including the same.

### [Technical Solution]

According to one embodiment of the present disclosure, a battery module includes a battery cell stack including a plurality of stacked battery cells; and at least one cooling member arranged on at least one of both side surfaces of the battery cell stack or between the plurality of battery cells. The cooling member includes a cooling channel that is a space inside the cooling member where a coolant flows, and an air gap that is an empty space separated from the cooling channel.

One surface of the cooling member may come into contact with one surface of at least one battery cell among the plurality of battery cells.

The cooling member may have a plate shape and may cool at least one battery cell among the plurality of battery cells by surface cooling.

The air gap may include a first air gap and a second air gap, and the cooling channel may be positioned between the first air gap and the second air gap.

The first air gap, the cooling channel, and the second air gap may be sequentially positioned in a direction in which the plurality of battery cells are stacked.

The cooling channel may include a first cooling channel and a second cooling channel, and the air gap may be positioned between the first cooling channel and the second cooling channel.

The first cooling channel, the air gap, and the second cooling channel gap may be sequentially positioned in a direction in which the plurality of battery cells are stacked.

Each of the plurality of battery cells may include an electrode lead, a busbar frame may be arranged in a direction in which the electrode lead protrudes from the plurality of battery cells on the basis of the battery cell stack, and a busbar may be mounted on the busbar frame.

The cooling member may include an inlet port that supplies the coolant to the cooling channel and an outlet port that discharges the coolant from the cooling channel, and the inlet port and the outlet port may pass through the busbar frame and be connected to a pack coolant supply pipe and a pack coolant discharge pipe, respectively.

The inlet port and the outlet port may extend farther than the busbar frame on the basis of the battery cell stack.

According to one embodiment of the present disclosure, a battery pack includes the battery module including a plurality of battery modules; a pack frame that accommodates the plurality of battery modules; and a pack coolant supply pipe and a pack coolant discharge pipe that are connected to the cooling member and are accommodated in the pack frame.

The cooling member may include an inlet port connected to the pack coolant supply pipe and an outlet port connected to the pack coolant discharge pipe. The inlet port and the outlet port may pass through a busbar frame arranged on one side of the battery cell stack and be connected to the pack coolant supply pipe and the pack coolant discharge pipe, respectively.

The pack coolant supply pipe and the pack coolant discharge pipe may be arranged in a space between the plurality of battery modules and a side frame of the pack frame.

According to one embodiment of the present disclosure, a vehicle includes the battery pack.

### [Advantageous Effects]

According to embodiments of the present disclosure, a cooling member having a cooling channel and an air gap is arranged adjacent to battery cells, thereby enabling the control of the swelling of the battery cells while further enhancing the cooling performance of the battery cells.

The effects of the present disclosure are not limited to those mentioned above, and other effects that have not mentioned will be clearly understood by those skilled in the art from the description of the claims.

### [BRIEF DESCRIPTION OF THE DRAWINGS]

The drawings attached herewith are merely illustrative of embodiments of the present disclosure, and take on the role of further facilitating the understanding of the technical idea of the present disclosure along with the descriptions herein. Thus, the present disclosure should not be construed as being limited to those illustrated in the drawings.
FIG. 1 is a perspective view of a conventional battery module.
FIG. 2 is a cross-sectional view taken along the cutting line A-A' of FIG. 1.
FIG. 3 is a perspective view illustrating a battery module according to one embodiment of the present disclosure.
FIG. 4 is an exploded perspective view of the battery module of FIG. 3.
FIG. 5 is an exploded perspective view illustrating a battery cell stack, a first busbar frame, and a second busbar frame included in the battery module of FIG. 4.
FIG. 6 is a perspective view illustrating one of battery cells included in the battery cell stack of FIG. 5.
FIGS. 7 and 8 are perspective views illustrating battery cells and a cooling member according to one embodiment of the present disclosure.
FIG. 9 is a perspective view illustrating the cooling member according to one embodiment of the present disclosure.
FIG. 10 is a partial perspective view illustrating the cooling member of FIG. 9 as viewed from a different angle.
FIG. 11 is a cross-sectional view taken along the cutting line B-B' of FIG. 9.
FIG. 12 is a cross-sectional view illustrating a cooling member according to another embodiment of the present disclosure.
FIG. 13 is a perspective view illustrating a battery cell stack, a first busbar frame, and a second busbar frame according to one embodiment of the present disclosure.
FIGS. 14 and 15 are a perspective view and a front view, respectively, illustrating the first busbar frame according to one embodiment of the present disclosure.
FIG. 16 is a plan view illustrating a battery pack according to one embodiment of the present disclosure.
FIG. 17 is a perspective view illustrating a vehicle including the battery pack according to one embodiment of the present disclosure.

In some of the attached drawings, corresponding components are given the same reference numerals. Those skilled in the art would appreciate that the drawings depict elements simply and clearly and have not necessarily been drawn to scale. For example, to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the spirit of the various embodiments of the present disclosure.

### [DETAILED DESCRIPTION OF THE EMBODIMENTS]

Hereinafter, several embodiments of the present disclosure will be described with reference to the accompanying drawings so that those skilled in the art to which the present disclosure pertains can easily implement the present disclosure. The present disclosure may be implemented in various different forms and is not limited to the embodiments described herein.

To clearly describe the present disclosure, irrelevant parts have been omitted, and the same reference numerals are given to identical or similar components throughout the specification.

In addition, the size and thickness of each component illustrated in the drawing are arbitrarily represented for convenience of description, and therefore, are not intended to limit the present disclosure necessarily to the illustrations thereof. To clearly represent various layers and regions, thicknesses are illustrated as exaggerated in the drawings. Then, for convenience of description, the thicknesses of some layers and regions are illustrated as exaggerated in the drawings.

Further, when a part such as a layer, film, region, or plate, is described as being "above" or "on" another part, this includes not only cases where it is "directly above" the other part, but also cases where there is another part in between. Conversely, when a part is described as being "directly above" another part, it means that there is no intervening part. Additionally, the description of a part as being "above" or "on" a reference part refers to the position thereof above or below the reference part, and does not necessarily imply that the part is positioned "above" or "on" the reference part in the direction opposite to gravity.

Additionally, when a certain part is described as "including" a certain component throughout the specification, it means that, unless otherwise explicitly stated, the part may include additional components, rather than excluding other components.

Moreover, throughout the specification, "in plan view" refers to viewing a target part from above, while "in cross-sectional view" refers to viewing the cross section of the target part when cut vertically from the lateral side.

Currently commercialized secondary batteries include nickel cadmium batteries, nickel hydrogen batteries, nickel zinc batteries, lithium secondary batteries, and others. Among these, lithium secondary batteries have advantages over the nickel-based secondary batteries, such as minimal memory effects, which allows for more flexible charge and discharge, a very low self-discharge rate, and a high energy density.

A lithium secondary battery may utilize a lithium-based oxide and a carbon material, as a positive electrode active material and a negative electrode active material, respectively. The lithium secondary battery may include an electrode assembly, where a positive electrode plate and a negative electrode plate, each coated with a positive electrode active material or a negative electrode active material, are arranged with a separator therebetween, and a battery case that seals and accommodates the electrode assembly along with an electrolyte.

Depending on the shape of an exterior material, the lithium secondary battery may be classified into a can-type secondary battery, where the electrode assembly is accommodated in a metallic can, or a pouch-type secondary battery, where the electrode assembly is accommodated in a pouch made of an aluminum laminate sheet.

Secondary batteries used in small devices may include two or three battery cells, whereas secondary batteries used in medium- to large-scale devices such as vehicles may utilize a battery module, where multiple battery cells are electrically connected. The battery module may enhance capacity and output by forming a stack of battery cells connected in series or parallel. One or more battery modules may be mounted, along with various control and protection systems such as a battery management system (BMS), a battery disconnect unit (BDU), and a cooling system, to form a battery pack.

The battery pack includes the battery module as a lower-level concept, and the battery module includes the battery cell as a lower-level concept. Then, the number of battery cells in the battery module or the number of battery modules in the battery pack may be determined in various ways according to the output power and capacity requirements of the battery pack for an electric vehicle.

A battery module included in a vehicle battery pack may be frequently exposed to direct sunlight and may face high-temperature conditions such as in summer or desert regions. Therefore, ensuring stable and effective cooling performance in the battery module and battery pack is critical. A cooling method for the battery module and battery pack may be broadly divided into a water cooling method that utilize a coolant such as water and an air cooling method that utilizes cooling air. Among these, water cooling offers excellent cooling performance, effectively dissipating the high heat generated by a large-capacity battery module or battery pack.

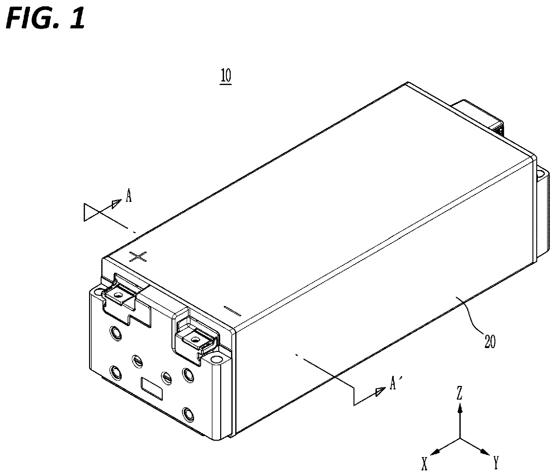

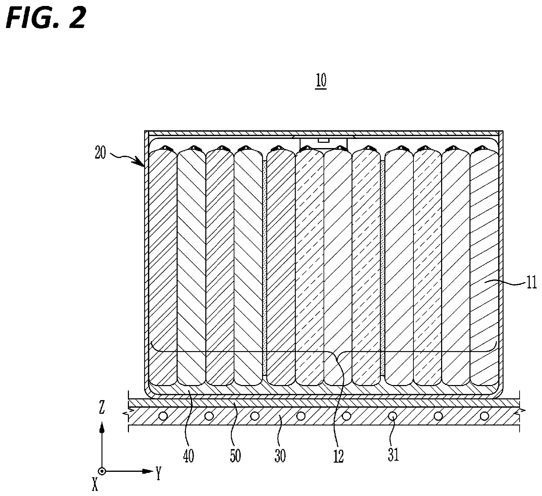

FIG. 1 is a perspective view of a conventional battery module, and FIG. 2 is a cross-sectional view taken along the cutting line A-A' of FIG. 1. For convenience of description, FIG. 2 additionally illustrates a heat sink 30 positioned under a battery module 10.

Referring to FIGS. 1 and 2, the conventional battery module 10 includes a battery cell stack 12, where a plurality of battery cells 11 are stacked, and a module frame 20 that accommodates the battery cell stack 12. In this case, the battery cells 11 are pouch-type battery cells with a rectangular sheet structure.

Since the plurality of battery cells 11 are stacked, the battery module 10 generates a large amount of heat during charge and discharge cycles. Conventionally, a heat transfer path from the edge portion of the battery cells 11 to the heat sink 30 has been implemented to cool the battery module 10.

The battery module 10 may include a thermal resin layer 40 located between the battery cell stack 12 and the bottom of the module frame 20. Further, when the battery module 10 is mounted on a pack frame to form a battery pack, a heat transfer member 50 and the heat sink 30 may be sequentially positioned under the battery module 10. The heat transfer member 50 may be a heat dissipation pad, and the heat sink 30 may include a cooling flow path 31 through which a coolant such as water flows. The edge of the battery cells 11, stacked in one direction, comes into contact with the thermal resin layer 40. The heat generated from the battery cells 11 may be transferred sequentially through the thermal resin layer 40, the bottom of the module frame 20, the heat transfer member 50, and the heat sink 30 to the outside of the battery module 10. In other words, the conventional battery module 10 employs a water cooling structure that dissipates heat through the edge portion of the battery cells 11.

The water cooling structure utilizing the edge portion of the battery cells 11 is relatively simplified in design, but has poor cooling performance and poses a risk of cracks, for example, in pouch cases of the battery cells 11 during the significant swelling of the battery cells 11.

The battery cells 11 may experience a phenomenon known as swelling or breathing, in which an internal electrolyte decomposes and a gas is generated during repeated charge and discharge cycles or during initial charge, causing the battery cells 11 to expand.

As the capacity of battery cells increases, the degree of swelling also increases significantly. Furthermore, the number of battery cells applied to a battery module also gradually increases. Therefore, controlling the swelling of battery cells inside a battery module has become an important issue.

Referring again to FIG. 2, the thermal resin layer 40 generally has adhesive properties to fix the battery cells 11 in place. Therefore, when the swelling of the battery cells 11 occurs, high stress is generated at the edge of the battery cells 11, which may lead to cracks in the pouch cases of the battery cells 11. The risk of cracks is greater for the battery cells 11 located at the outermost positions of the battery cell stack 12 since these battery cells are subjected to higher stress due to swelling.

If a conventional edge portion-based water cooling method is applied to a battery module including such swelling-prone battery cells, there is a high risk of cracks in the battery cells. Additionally, excessive stress may be applied, which may compromise the structural safety of the battery module.

Therefore, there is a need for a battery module having a novel cooling structure that may control the swelling of battery cells while further enhancing cooling performance.

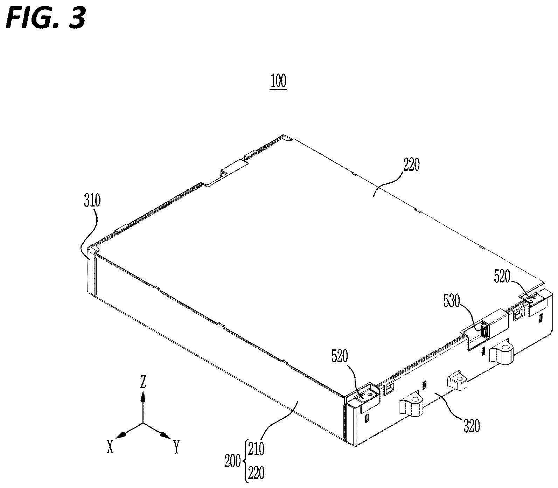

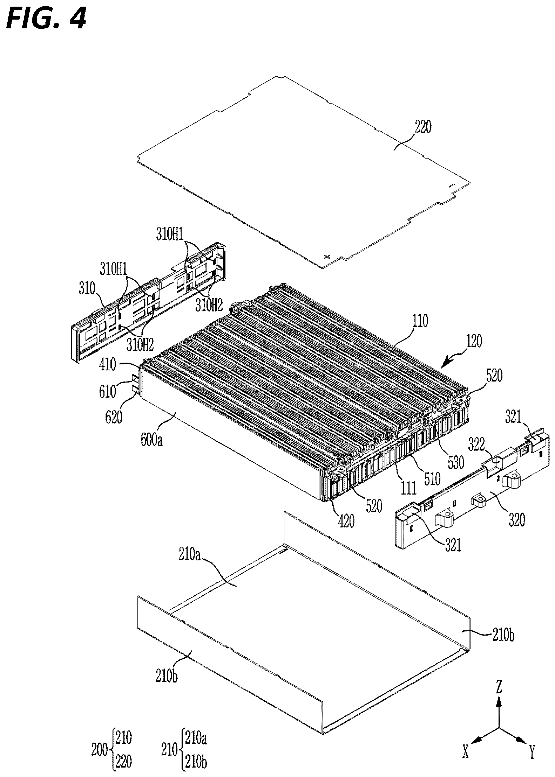

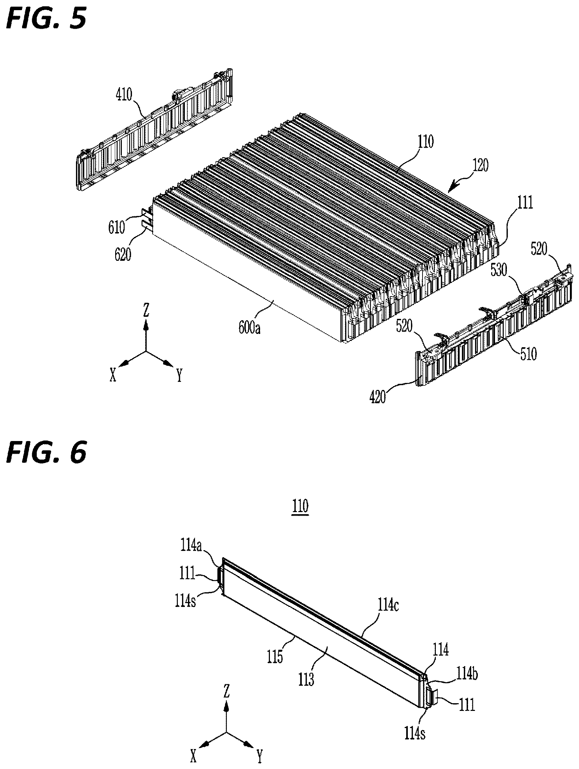

FIG. 3 is a perspective view illustrating a battery module according to one embodiment of the present disclosure. FIG. 4 is an exploded perspective view of the battery module of FIG. 3. FIG. 5 is an exploded perspective view illustrating a battery cell stack, a first busbar frame, and a second busbar frame included in the battery module of FIG. 4. FIG. 6 is a perspective view illustrating one of battery cells included in the battery cell stack of FIG. 5.

Referring to FIGS. 3 to 6, a battery module 100 according to one embodiment of the present disclosure includes a battery cell stack 120 where a plurality of battery cells 110 are stacked; and at least one cooling member 600a arranged on at least one of both side surfaces of the battery cell stack 120 or between the battery cells 110. The cooling member 600a may include a cooling channel, which is a space inside the cooling member 600a where a coolant flows, and an air gap, which is an empty space separated from the cooling channel. The shape of the cooling member 600a will be described later.

The battery cells 110 according to the present embodiment may take various shapes, and for example, may be pouch-type battery cells, prismatic battery cells, or cylindrical battery cells. For example, as illustrated in FIGS. 4 to 6, the battery cells 110 according to the present embodiment may be pouch-type battery cells. Although the following description focuses on pouch-type battery cells, the battery cells 110 according to the present embodiment are not limited to this type and may encompass various types of battery cells.

Each battery cell 110 according to the present embodiment may include an electrode assembly, which includes electrode leads 111 protruding in one or both directions, accommodated in a pouch case 114. Such a battery cell 110 may have a rectangular sheet shape. The battery cell 110 may be formed by accommodating the electrode assembly in the pouch case 114 made of a laminate sheet that includes a resin layer and a metal layer, followed by bonding the outer periphery of the pouch case 114. For example, the battery cell 110 may have a structure in which two electrode leads 111 protrude respectively in opposite directions from one end 114a and the other end 114b of a cell body 113. In another embodiment, all the electrode leads 111 of the battery cell 110 may protrude in one direction. One of the electrode leads 111 is a positive electrode lead and the other electrode lead is a negative electrode lead.

The battery cell 110 may be prepared by bonding both of the ends 114a and 114b of the pouch case 114 and one side portion 114c connecting the both ends 114a and 114b, while accommodating the electrode assembly (not illustrated) in the pouch case 114. In other words, the battery cell 110 according to one embodiment of the present disclosure has a total of three sealing portions 114s, which are sealed by, for example, fusion. The remaining side portion may be configured as a folded portion 115. In other words, the battery cell 110 according to the present embodiment may be a pouch-type secondary battery where the electrode assembly is accommodated inside the pouch case 114, and the outer peripheral sides of the pouch case 114 are sealed to form the sealing portions 114s. In FIG. 6, the sealing portions 114s are illustrated only at both of the ends 114a and 114b of the pouch case 114. The side facing the folded portion 115 does not show a sealing portion because, for efficient use of space, the sealing portion at the side facing the folded portion 115 is folded to one side after the sealing is completed.

The pouch case 114 made of a laminate sheet may include an inner resin layer for sealing, a metal layer for preventing the penetration of substances, and an outer resin layer at the outermost position. On the basis of the electrode assembly inside the pouch case 114, the inner resin layer may be positioned at the innermost side, the outer resin layer may be positioned at the outermost side, and the metal layer may be positioned between the inner resin layer and the outer resin layer.

The outer resin layer may have an excellent tensile strength relative to the thickness thereof, weather resistance, and electrical insulation, to protect the electrode assembly from external conditions. The outer resin layer may include polyethylene terephthalate (PET) resin or nylon resin. The metal layer may prevent or suppress substances such as air and moisture from entering the pouch-type secondary battery. The metal layer may include aluminum (Al). The inner resin layer may be thermally fused with itself when subjected to heat and/or pressure, with the electrode assembly embedded therein. The inner resin layer may include casted polypropylene (CPP) or polypropylene (PP).

The pouch case 114 may be divided into two sections, and a recessed compartment, in which the electrode assembly may be seated, may be formed in at least one of the two sections. The inner resin layers of the two sections of the pouch case 114 may be joined to each other along the outer perimeter of the compartment to form the sealing portions 114s. In this way, the pouch case may be sealed, completing the preparation of the battery cell 110, which is a pouch-type secondary battery.

The battery module 100 may incorporate the plurality of battery cells 110 therein. For example, the plurality of battery cells 110 may be stacked in one direction so as to be electrically connected to each other to form the battery cell stack 120. For example, the plurality of battery cells 110 may be stacked upright in a direction parallel to the X-axis. The battery cells 110 may be stacked from one side surface portion 210b to the other side surface portion 210b of a module frame 200 to be described later, with one surface of the battery cells 110 parallel to the side surface portion 210b. Accordingly, the electrode leads 111 may protrude in a direction perpendicular to the direction in which the battery cells 110 are stacked. In each battery cell 110, one electrode lead 111 may protrude in the Y-axis direction, while the other electrode lead 111 may protrude in the -Y-axis direction. When the electrode leads 111 protrude in only one direction from the battery cell, the electrode leads 111 may protrude in either the Y-axis direction or the -Y-axis direction.

Meanwhile, the battery module 100 according to the present embodiment may include the module frame 200 that accommodates the battery cells 110. For example, the module frame 200 according to the present embodiment may include a lower frame 210, on which the battery cells 110 are placed, and an upper cover 220 that covers the top of the battery cells 110.

The lower frame 210 and the upper cover 220 are joined, for example, by welding corresponding corners thereof, so that the module frame 200 may cover the upper side, lower side, and both lateral sides of the battery cell stack 120. Although not specifically illustrated, a module frame according to another embodiment of the present disclosure may be a mono-frame where the ceiling, bottom, and both side surface portions are integrated.

The lower frame 210 according to the present embodiment may include a bottom 210a and both side surface portions 210b. Both the side surface portions 210b may extend upward from along opposing sides of the bottom 210a in a direction perpendicular to one surface of the bottom 210a. The bottom 210a and both the side surface portions 210b may cover a lower surface and both side surfaces of the battery cell stack 120. As described above, one surface of the battery cells 110 inside the battery cell stack 120 may be parallel to the side surface portions 210b of the lower frame 210, and the battery cells 110 may be stacked in a direction from one side surface portion 210b to the other side surface portion 210b.

Meanwhile, in the battery module 100 according to the present embodiment, a first end plate 310 and a second end plate 320 may be arranged, respectively, on the opposing surfaces of the battery cell stack 120 in the direction in which the electrode leads 111 protrude from the battery cell stack 120. These first and second end plates 310 and 320 may be joined to the module frame 200 by, for example, welding. The module frame 200, first end plate 310, and second end plate 320 may include a metal material to have a predetermined strength. The battery cell stack 120 may be covered by the module frame 200, first end plate 310, and second end plate 320 to thereby be protected from external shocks or vibrations.

Meanwhile, the battery module 100 according to the present embodiment may include a first busbar frame 410 and a second busbar frame 420, which cover respective opposite sides of the battery cell stack 120 in the direction in which the electrode leads 111 protrude from the battery cell stack 120. The first busbar frame 410 may be positioned between the battery cell stack 120 and the first end plate 310, and the second busbar frame 420 may be positioned between the battery cell stack 120 and the second end plate 320. The first and second busbar frames 410 and 420 may include an electrical insulating material, and may prevent or suppress a short circuit caused by contact between a busbar 510 or terminal busbar 520 to be described later and other parts of the battery cell 110 other than the electrode leads 111.

The busbar 510, the terminal busbar 520, and a module connector 530 may be mounted on each of the first busbar frame 410 and the second busbar frame 420. The busbar 510, terminal busbar 520, and module connector 530 may be mounted on the surface of the first or second busbar frame 410 or 420 opposite to the surface facing the battery cell stack 120. The bus bar 510 may be electrically connected to the electrode lead 111 of the battery cell 110. For example, the bus bar 510 and the electrode lead 111 may be joined by welding. A slit is formed in the first and second busbar frames 410 and 420, and the electrode lead 111 may pass the these slit and be connected to the busbar 510. The battery cells 110 may be electrically connected in series or parallel via the bus bar 510.

The terminal bus bar 520 may be electrically connected to the electrode lead 111, and a portion thereof may be exposed to the outside of the battery module 100. For example, a terminal busbar opening 321 may be formed in the second end plate 320. A portion of the terminal bus bar 520 may be exposed to the outside of the battery module 100 through the terminal busbar opening 321. The battery module 100 may form a high voltage (HV) connection with other battery modules or electrical components through the terminal busbar 520. Here, the HV connection refers to a power supply connection required for a high voltage operation, which means a connection between battery cells or between battery modules.

The module connector 530 is a member for a low voltage (LV) connection of the battery module 100. The LV connection refers to an electrical connection that requires a relatively low voltage, for example, between battery electrical components. For example, a sensing member (not illustrated) may sense voltage data of the battery cells 110 or temperature data inside the battery module 100, and the module connector 530 connected to the sensing member may transmit the sensed voltage data or temperature data to a battery management system (BMS) located outside the battery module 100. Thus, a portion of the module connector 530 may also be exposed to the outside of the battery module 100. For example, a module connector opening 322 may be formed in the second end plate 320. The module connector 530 may be exposed to the outside of the battery module 100 through the module connector opening 322, and may be connected to an external BMS and others.

Hereinafter, a cooling member according to the present embodiment will be described.

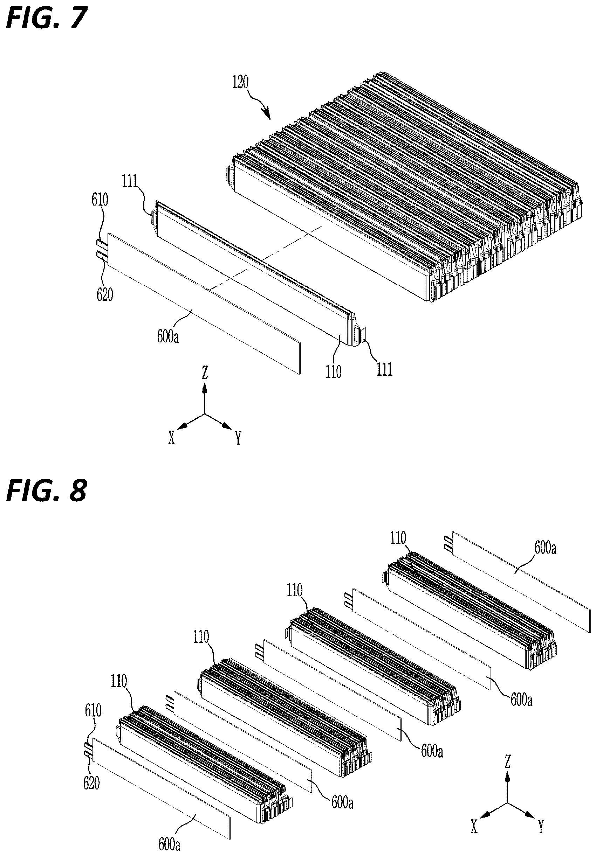

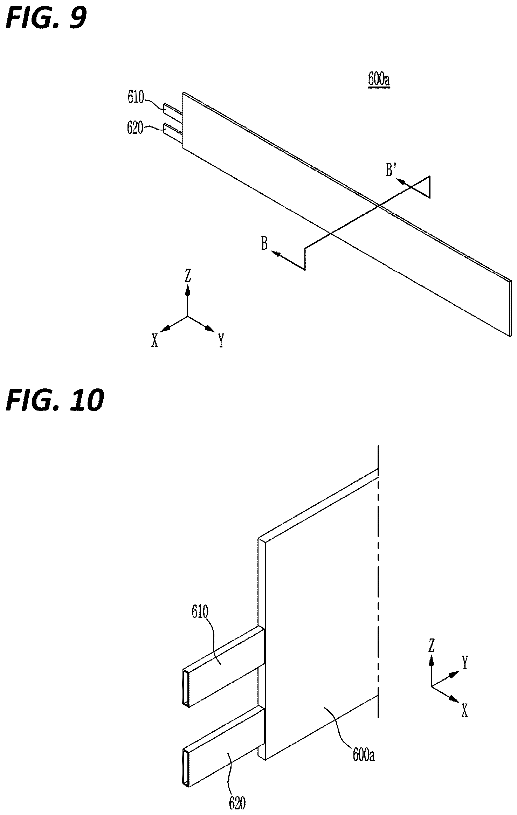

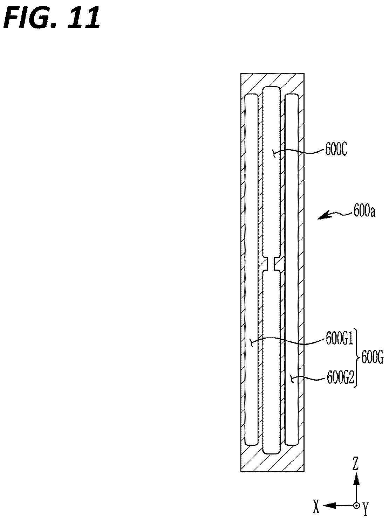

FIGS. 7 and 8 are perspective views illustrating battery cells and a cooling member according to one embodiment of the present disclosure. FIG. 9 is a perspective view illustrating the cooling member according to one embodiment of the present disclosure. FIG. 10 is a partial perspective view illustrating the cooling member of FIG. 9 as viewed from a different angle. FIG. 11 is a cross-sectional view taken along the cutting line B-B' of FIG. 9.

Referring to FIGS. 4 to 11 collectively, the cooling member 600a according to the present embodiment includes a cooling channel 600C, which is a space inside the cooling member 600a where a coolant flows, and an air gap 600G, which is an empty space separated from the cooling channel 600C. One surface of the cooling member 600a may come into contact with one surface of the battery cell 110. In other words, the cooling member 600a may cool the battery cell 110 by surface cooling in a plate-like form. The coolant may be cooling water. The battery module 100 according to the present embodiment may have a water cooling structure.

In contrast to the conventional battery module 10 illustrated in FIGS. 1 and 2, which has an edge cooling structure in which heat is dissipated through the edge portion of the battery cells 11, the battery module 100 according to the present embodiment may have a surface cooling structure in which the cooling member 600a having the cooling channel 600C comes into contact with one surface of the cell body 113 of the battery cell 110. Since one surface of the cell body 113 of the battery cell 110 may come into contact with the cooling member 600a, the cooling area is significantly wider, resulting in superior cooling performance compared to the conventional battery module 10.

There are no special limitations on the number or size of cooling members 600a inside the battery module 100 as long as surface cooling of the battery cells 110 may be performed. A plurality of cooling members 600a may be provided inside the battery module 100. Some cooling members 600a may be positioned between the battery cells 110, while other cooling members 600a may be arranged on both side surfaces of the battery cell stack 120. For example, in FIGS. 7 and 8, three cooling members 600a are arranged between the battery cells 110, and two cooling members 600a are each arranged on either side surface of the battery cell stack 120. Additionally, in another embodiment, the cooling members 600a may be arranged anywhere between the battery cells 110. The number of cooling members 600a may be appropriately changed in consideration of factors such as the size, capacity, and heat generation amount of the battery module 100. Moreover, there are no special limitations on the size of the cooling member 600a as long as the cooling member 600a may cover at least about 60% of the area of one surface of the battery cell 110.

As described above, the battery cells 110 may experience a phenomenon known as swelling, in which an internal electrolyte decomposes and a gas is generated during repeated charge and discharge cycles, causing the battery cells 110 to expand. In the swelling phenomenon of the battery cells 110, the battery cells 110 expand in the thickness direction. In other words, the battery cells 110 may expand in the direction in which the battery cells 110 are stacked (for example, the direction parallel to the X-axis in FIG. 5). Since the cooling member 600a according to the present embodiment includes the air gap 600G therein, the cooling member 600a may absorb the swelling of the battery cells 110. Conventionally, a compression pad made of a foam material was interposed between the battery cells 110 to absorb the swelling of the battery cells 110. In the present embodiment, the cooling member 600a positioned between the battery cells 110 may absorb the swelling of the battery cells 110, thereby replacing the function of the conventional compression pad. In other words, the cooling member 600a according to the present embodiment may perform not only the surface cooling function for the battery cells 110 but also the function of absorbing the swelling of the battery cells 110. Accordingly, the deformation of the battery module 100 beyond the deformation limit due to the swelling of the battery cells 110 may be prevented or suppressed.

Meanwhile, in the conventional battery module 10, since the edge of the battery cells 11 are bonded and fixed to the thermal resin layer 40, high stress is generated at the edge of the battery cells 11 when swelling occurs, potentially leading to cracks in the battery cells 11. In the case of the battery module 100 according to the present embodiment, since the cooling members 600a are arranged between the battery cells 110, the battery cells 110 are not bonded or fixed to specific points. This may provide a certain degree of structural flexibility in the stacking direction of the battery cells 110 even if high swelling occurs in the battery cells 110, thereby preventing or suppressing cracks in the battery cells 110.

Meanwhile, as illustrated in FIGS. 8 and 11, the air gap 600G according to the present embodiment may include a first air gap 600G1 and a second air gap 600G2. The cooling channel 600C may be positioned between the first air gap 600G1 and the second air gap 600G2. The first air gap 600G1, cooling channel 600C, and second air gap 600G2 may be positioned sequentially in the direction in which the battery cells 110 are stacked (the direction parallel to the X-axis, see FIG. 8). In the present embodiment, since the first air gap 600G1 or the second air gap 600G2 may be positioned adjacent to the battery cells 110, the swelling of the battery cells 110 may be absorbed more effectively.

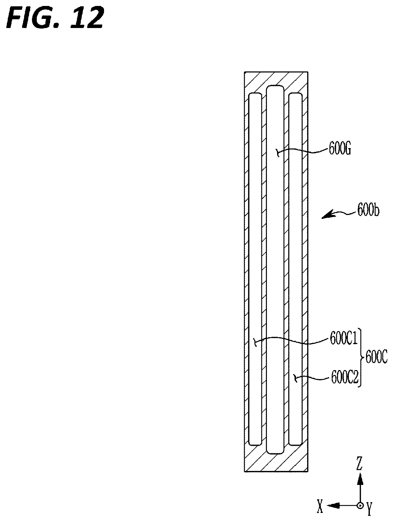

FIG. 12 is a cross-sectional view illustrating a cooling member according to another embodiment of the present disclosure.

Referring to FIGS to 12, a cooling member 600b according to another embodiment of the present disclosure includes the cooling channel 600C, which is a space inside the cooling member 600b where a coolant flows, and the air gap 600G, which is an empty space separated from the cooling channel 600C. One surface of the cooling member 600b may come into contact with one surface of the battery cell 110. In other words, the cooling member 600b may cool the battery cell 110 by surface cooling in a plate-like form. As with the cooling member 600a described above, the cooling member 600b according to the present embodiment also includes the cooling channel 600C and the air gap 600G, and therefore, may perform both the surface cooling function for the battery cells 110 and the function of absorbing the swelling of the battery cells 110.

Meanwhile, the cooling channel 600C of the cooling member 600b according to the present embodiment may include a first cooling channel 600C1 and a second cooling channel 600C2. The air gap 600G may be positioned between the first cooling channel 600C1 and the second cooling channel 600C2. The first cooling channel 600C1, air gap 600G, and second cooling channel 600C2 may be positioned sequentially in the direction in which the battery cells 110 are stacked (the direction parallel to the X-axis, see FIG. 8). In the present embodiment, since the first cooling channel 600C1 or the second cooling channel 600C2 may be positioned adjacent to the battery cells 110, the cooling performance of the battery cells 110 may be further enhanced.

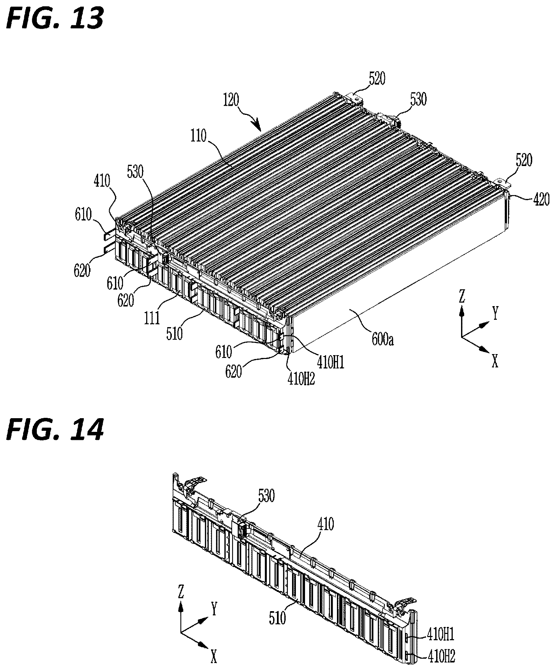

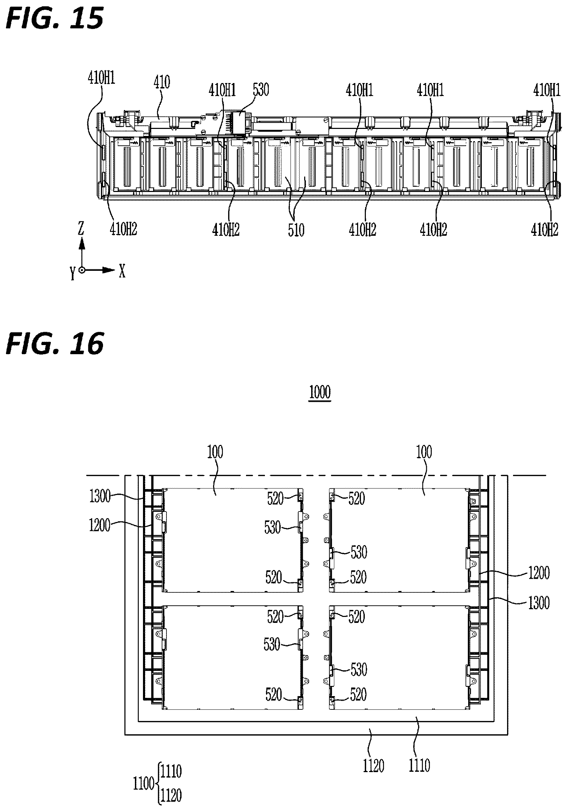

FIG. 13 is a perspective view illustrating the battery cell stack, first busbar frame, and second busbar frame according to one embodiment of the present disclosure. FIGS. 14 and 15 are a perspective view and a front view, respectively, illustrating the first busbar frame according to one embodiment of the present disclosure.

Referring to FIGS. 5, 8 to 11 and 13 to 15 collectively, as described above, the battery cell 110 according to the present embodiment may include the electrode leads 111, the busbar frames 410 and 420 may be arranged in the direction in which the electrode leads 111 protrude from the battery cell 110 on the basis of the battery cell stack 120, and the busbar 510 may be mounted on each of the busbar frames 410 and 420. For example, the first busbar frame 410 and the second busbar frame 420 may be arranged on either side of the battery cell stack 120.

The cooling member 600a according to the present embodiment may include an inlet port 610 for supplying a coolant to the cooling channel 600C and an outlet port 620 for discharging the coolant from the cooling channel 600C. The inlet port 610 and the outlet port 620 may pass through the first busbar frame 410 and be connected to a pack coolant supply pipe and a pack coolant discharge pipe, respectively. The pack coolant supply pipe and pack coolant discharge pipe will be described later with reference to FIG. 16.

The inlet port 610 and the outlet port 620 may be pipe-shaped members extending from one side of the cooling member 600a. The coolant may be introduced into the cooling channel 600C through the inlet port 610, and then be discharged from the cooling channel 600C through the outlet port 620. In other words, the cooling member 600a may have a coolant circulation structure through the inlet port 610 and the outlet port 620.

The first busbar frame 410 may be provided with an inlet hole 410H1 and an outlet hole 410H2. The inlet port 610 of the cooling member 600a may pass through the inlet hole 410H1 of the first busbar frame 410, and the outlet port 620 of the cooling member 600a may pass through the outlet hole 410H2 of the first busbar frame 410. The inlet port 610 and the outlet port 620 may extend farther than the first busbar frame 410 on the basis of the battery cell stack 120, and may pass through the inlet hole 410H1 and the outlet hole 410H2, respectively. The inlet port 610 and the outlet port 620 having passed respectively through the inlet hole 410H1 and the outlet hole 410H2 may be connected to the pack coolant supply pipe and the pack coolant discharge pipe, which will be described later. Each of the inlet hole 410H1 and the outlet hole 410H2 may be formed in the first busbar frame 410 in a quantity corresponding to the number of cooling members 600a.

As in the present embodiment, since the inlet port 610 and the outlet port 620 pass through the first busbar frame 410 and extend farther than the location of the first busbar frame 410, the connection portion of the inlet port 610 with the pack coolant supply pipe or the connection portion of the outlet port 620 with the pack coolant discharge pipe may be distanced from electrical connection portions such as electrode leads or busbars. In other words, the insulation of the cooling member 600a may be secured by separating the cooling connection portions from the electrical connection portions.

In addition, since the inlet port 610 and the outlet port 620 pass through the inlet hole 410H1 and the outlet hole 410H2 while being respectively inserted into the inlet hole 410H1 and the outlet hole 410H2, the inlet port 610 and the outlet port 620 may be fixed in the inlet hole 410H1 and the outlet hole 410H2. This may ensure that the inlet port 610 and the outlet port 620 have safety against external vibrations or shocks and may prevent or suppress coolant leakage from the inlet port 610 or the outlet port 620.

Meanwhile, referring to FIGS. 4, 5, and 13 to 15 collectively, as described above, the battery module 100 may include the first end plate 310, and the first busbar frame 410 may be positioned between the first end plate 310 and the battery cell stack 120. The first end plate 310 may have an external inlet hole 310H1 and an external outlet hole 310H2. Each of the external inlet hole 310H1 and the external outlet hole 310H2 may be positioned to correspond to the inlet hole 410H1 and the outlet hole 410H2 of the first busbar frame 410.

The inlet port 610 having passed through the inlet hole 410H1 of the first busbar frame 410 may pass through the external inlet hole 310H1 of the first end plate 310 to thereby be exposed to the outside of the battery module 100, and may then be connected to the pack coolant supply pipe to be described later. The outlet port 620 having passed through the outlet hole 410H2 of the first busbar frame 410 may pass through the external outlet hole 310H2 of the first end plate 310 to thereby be exposed to the outside of the battery module 100, and may then be connected to the pack coolant discharge pipe to be described later.

Hereinafter, a battery pack according to one embodiment of the present disclosure will be described.

FIG. 16 is a plan view illustrating a battery pack according to one embodiment of the present disclosure.

Referring to FIGS. 4, 5, and 16 collectively, a battery pack 1000 according to one embodiment of the present disclosure includes the battery modules 100; a pack frame 1100 that accommodates the battery modules 100; and a pack coolant supply pipe 1200 and a pack coolant discharge pipe 1300, which are connected to the cooling member 600a and are accommodated in the pack frame.

As described above, the cooling member 600a may include the inlet port 610 connected to the pack coolant supply pipe 1200 and the outlet port 620 connected to the pack coolant discharge pipe 1300. The inlet port 610 and the outlet port 620 may pass through the first busbar frame 410 and be connected to the pack coolant supply pipe 1200 and the pack coolant discharge pipe 1300, respectively. For example, the inlet port 610 having passed through the inlet hole 410H1 of the first busbar frame 410 and the external inlet hole 310H1 of the first end plate 310 may be connected to the pack coolant supply pipe 1200. In addition, the outlet port 620 having passed through the outlet hole 410H2 of the first busbar frame 410 and the external outlet hole 310H2 of the first end plate 310 may be connected to the pack coolant discharge pipe 1300. The pack coolant supply pipe 1200 and the pack coolant discharge pipe 1300 may be connected to a coolant circulation system (not illustrated) located inside or outside the battery pack 1000. In other words, the coolant moving along the pack coolant supply pipe 1200 from the coolant circulation system may be introduced into the cooling channel 600C through the inlet port 610. Then, the coolant discharged from the cooling channel 600C through the outlet port 620 may be returned to the coolant circulation system again along the pack coolant discharge pipe 1300. Through this process, the coolant circulation structure may be implemented inside the battery pack 1000.

The pack frame 1100 according to the present embodiment may include a bottom frame 1110 on which battery modules 100 are placed and a side frame 1120, which extends along the edge of the bottom frame 1110. The side frame 1120 may extend in a direction perpendicular to one surface of the bottom frame 1110. The bottom frame 1110 and the side frame 1120 may define an internal space with an open top, in which the battery modules 100 may be accommodated. Meanwhile, a pack cover (not illustrated) may cover the open top of the pack frame 1100.

The pack coolant supply pipe 1200 and the pack coolant discharge pipe 1300 according to the present embodiment may be arranged in the space between the battery modules 100 and the side frame 1120 of the pack frame 1100. Additionally, some of the battery modules 100 may be arranged such that the second end plates 320 face each other. As described above, the second end plate 320 may have the terminal busbar opening 321, through which the terminal busbar 520 may be exposed. The space between the battery modules 100 where the second end plates 320 face each other may be a space where a high voltage (HV) connection is made by the terminal busbars 520. In other words, HV lines connected to the terminal busbars 520 may be arranged in the space between the battery modules 100.

The pack coolant supply pipe 1200 and the pack coolant discharge pipe 1300 may be arranged in the space between the battery modules 100 and the side frame 1120 of the pack frame 1100, in order to be connected to the inlet port 610 and the outlet port 620 having passed through the external inlet hole 310H1 and the external outlet hole 310H2 of the first end plate 310, respectively.

Thus, from the perspective of any one battery module 100, the pack coolant supply pipe 1200 and the pack coolant discharge pipe 1300 may be positioned on the opposite side of the HV lines. In other words, the pack coolant supply pipe 1200 and the pack coolant discharge pipe 1300 may be positioned at the outer side of the first end plate 310, while the HV lines connected to the terminal busbar 520 may be positioned at the outer side of the second end plate 320.

By positioning the pack coolant supply pipe 1200 and the pack coolant discharge pipe 1300 far away from the HV lines, issues such as a short circuit caused when the coolant leaking from the pack coolant supply pipe 120 and the pack coolant discharge pipe 1300 comes into contact with the HV lines, may be prevented or suppressed. In other words, in the battery pack 1000 according to the present embodiment, the insulation performance and safety against coolant leakage may be secured by spatially separating the pack coolant supply pipe 1200 and the pack coolant discharge pipe 1300, through which the coolant flows, from the HV lines.

In the present embodiment, terms such as front, rear, left, right, up, and down are used to describe directions, but these terms are only for convenience of description and may depend on the position of a target object or the location of an observer.

One or more battery modules according to the present embodiment described above may be mounted along with various control and protection systems such as a battery management system (BMS), a battery disconnect unit (BDU), and a cooling system to form a battery pack.

The battery module or battery pack may be applied to various devices. For example, it may be applied to transportation vehicles such as electric bicycles, electric vehicles, and hybrids, as well as energy storage systems (ESS), but is not limited thereto, and may be applied to various devices that may use secondary batteries.

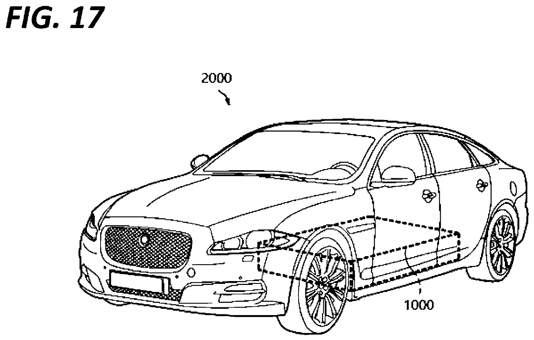

FIG. 17 is a diagram illustrating a vehicle 2000 including the battery pack according to one embodiment of the present disclosure. As illustrated in FIG. 17, the vehicle 2000 may include the battery pack 1000 according to the present disclosure. In addition, the vehicle 2000 may include the battery module 100 according to the present disclosure. The vehicle 2000 according to the present disclosure may further include various other components included in the vehicle 2000, in addition to the battery pack 1000 or the battery module 100. For example, the vehicle 2000 according to the present disclosure may further include a vehicle body, a motor, and a control device such as an electronic control unit (ECU).

In the above description, although the present disclosure has been described by limited embodiments and drawings, the above description is merely an example of the technical idea of the present disclosure, and those skilled in the art will appreciate that various modifications and variations may be made without departing from the essential characteristics of the present disclosure. Accordingly, the various embodiments disclosed herein are not intended to be limiting, with the true scope and spirit being indicated by the following claims.

## Claims

1. A battery module comprising:
a battery cell stack including a plurality of stacked battery cells; and
at least one cooling member arranged on at least one of both side surfaces of the battery cell stack or between the plurality of battery cells,
wherein the cooling member includes a cooling channel that is a space inside the cooling member where a coolant flows, and an air gap that is an empty space separated from the cooling channel.

2. The battery module according to claim 1, wherein one surface of the cooling member comes into contact with one surface of at least one battery cell among the plurality of battery cells.

3. The battery module according to claim 1, wherein the cooling member has a plate shape and cools at least one battery cell among the plurality of battery cells by surface cooling.

4. The battery module according to claim 1, wherein the air gap includes a first air gap and a second air gap, and
wherein the cooling channel is positioned between the first air gap and the second air gap.

5. The battery module according to claim 4, wherein the first air gap, the cooling channel, and the second air gap are sequentially positioned in a direction in which the plurality of battery cells are stacked.

6. The battery module according to claim 1, wherein the cooling channel includes a first cooling channel and a second cooling channel, and
wherein the air gap is positioned between the first cooling channel and the second cooling channel.

7. The battery module according to claim 6, wherein the first cooling channel, the air gap, and the second cooling channel gap are sequentially positioned in a direction in which the plurality of battery cells are stacked.

8. The battery module according to claim 1, wherein each of the plurality of battery cells includes an electrode lead,
wherein a busbar frame is arranged in a direction in which the electrode lead protrudes from the plurality of battery cells on the basis of the battery cell stack, and
wherein a busbar is mounted on the busbar frame.

9. The battery module according to claim 8, wherein the cooling member includes an inlet port that supplies the coolant to the cooling channel and an outlet port that discharges the coolant from the cooling channel, and
wherein the inlet port and the outlet port pass through the busbar frame and are connected to a pack coolant supply pipe and a pack coolant discharge pipe, respectively.

10. The battery module according to claim 9, wherein the inlet port and the outlet port extend farther than the busbar frame on the basis of the battery cell stack.

11. A battery pack comprising:
a plurality of battery modules in which at least one of the battery modules is the battery module according to claim 1;
a pack frame that accommodates the plurality of battery modules; and
a pack coolant supply pipe and a pack coolant discharge pipe that are connected to the cooling member and are accommodated in the pack frame.

12. The battery pack according to claim 11, wherein the cooling member includes an inlet port connected to the pack coolant supply pipe and an outlet port connected to the pack coolant discharge pipe, and
wherein the inlet port and the outlet port pass through a busbar frame arranged on one side of the battery cell stack and are connected to the pack coolant supply pipe and the pack coolant discharge pipe, respectively.

13. The battery pack according to claim 12, wherein the pack coolant supply pipe and the pack coolant discharge pipe are arranged in a space between the plurality of battery modules and a side frame of the pack frame.

14. A vehicle comprising the battery pack according to claim 11.
